(19) Europäisches Patentamt / European Patent Office / Office européen des brevets

(11) **EP 4 440 129 A1**

(12) **EUROPEAN PATENT APPLICATION**
published in accordance with Art. 153(4) EPC

(43) Date of publication:
**02.10.2024 Bulletin 2024/40**

(21) Application number: **22895242.0**

(22) Date of filing: **26.09.2022**

(51) International Patent Classification (IPC):
$H04N\ 23/60$ (2023.01)   $G03B\ 11/00$ (2021.01)
$G03B\ 15/00$ (2021.01)   $G03B\ 17/02$ (2021.01)
$G03B\ 30/00$ (2021.01)   $H04N\ 23/54$ (2023.01)
$H04N\ 23/55$ (2023.01)

(52) Cooperative Patent Classification (CPC):
G03B 11/00; G03B 15/00; G03B 17/02;
G03B 30/00; H04N 23/54; H04N 23/55; H04N 23/60

(86) International application number:
**PCT/JP2022/035755**

(87) International publication number:
**WO 2023/089956 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.11.2021  JP 2021189212**

(71) Applicant: **Sony Group Corporation**
**Tokyo 108-0075 (JP)**

(72) Inventors:
• **KONDO, Yuhi**
  **Tokyo 108-0075 (JP)**

• **KAIZU, Shun**
  **Tokyo 108-0075 (JP)**
• **HIRATA, Eiji**
  **Tokyo 108-0075 (JP)**
• **KURITA, Teppei**
  **Tokyo 108-0075 (JP)**
• **ONO, Taishi**
  **Tokyo 108-0075 (JP)**
• **SUN, Legong**
  **Tokyo 108-0075 (JP)**

(74) Representative: **D Young & Co LLP**
**3 Noble Street**
**London EC2V 7BQ (GB)**

(54) **IMAGE PROCESSING DEVICE, IMAGE PROCESSING METHOD, AND PROGRAM**

(57)    A high-frequency image can be acquired at low computational cost at high speed.

A polarization optical unit 20 separates incident light into first polarized light and second polarized light to perform optical low-pass filter processing on the first polarized light and combines the first polarized light subjected to the optical low-pass filter processing and the second polarized light not subjected to the optical low-pass filter processing to generate combined light. A polarization image acquisition unit 30 includes a first polarizing pixel that generates pixel information on the first polarization image and a second polarizing pixel that generates pixel information on the second polarization image on the basis of the combined light. An image processing unit 40 performs a difference computation between the first polarization image and the second polarization image acquired by the polarization image acquisition unit 30 to generates the high-frequency image.

FIG. 1

EP 4 440 129 A1

**Description**

TECHNICAL FIELD

This technology relates to an image processing apparatus, an image processing method, and a program and enables to easily obtain a high-frequency image.

BACKGROUND ART

Conventionally, in order to acquire a high-frequency image (also referred to as an edge image or a spatial difference image), filter processing using, for example, a Sobel filter is performed on image information. In addition, a straight line is detected by Hough transform, and a peak of intensity of a gradient related to luminance in an image is detected as an edge as in Non-Patent Document 1.

CITATION LIST

NON-PATENT DOCUMENT

Non-Patent Document 1: Canny, J "A Computational Approach To Edge Detection" IEEE Transactions on Pattern Analysis and Machine Intelligence,PAMI-8, NO. 6, 679-698, 1986.

SUMMARY OF THE INVENTION

PROBLEMS TO BE SOLVED BY THE INVENTION

Incidentally, in a case where filter processing is performed on image information or in a case where a straight line or a peak of intensity of a gradient related to luminance is detected, computational cost is high, and it is also difficult to acquire a high-frequency image at high speed.
Thus, an object of the present technology is to provide an image processing apparatus, an image processing method, and a program capable of acquiring a high-frequency image at high speed at low computational cost.

SOLUTIONS TO PROBLEMS

A first aspect of this technology is achieved by

an image processing apparatus including
a high-frequency image generation unit that generates a high-frequency image, using a first polarization image based on first polarized light that has been generated from incident light and subjected to optical low-pass filter processing, and a second polarization image based on second polarized light that has been generated from the incident light but has not been subjected to the optical low-pass filter processing.

In this technology, a polarization optical unit separates the incident light into the first polarized light and the second polarized light with a polarization separation unit and performs the optical low-pass filter processing on the first polarized light with an optical filter unit. In addition, the first polarized light subjected to the optical low-pass filter processing and the second polarized light not subjected to the optical low-pass filter processing are combined by a polarized light combining unit, and combined light is generated. In addition, the polarization optical unit may include a depolarizing element that transforms the incident light into non-polarized light and may include a depolarizing element that transforms the polarized light incident on the optical filter unit into non-polarized light, and a polarizing filter that takes out the first polarized light from non-polarized light that has undergone the optical low-pass filter processing in the optical filter unit.
A polarization image acquisition unit includes a first polarizing pixel that generates pixel information on the first polarization image on the basis of the combined light and a second polarizing pixel that generates pixel information on the second polarization image on the basis of the combined light. An angular difference in polarization directions between the first polarizing pixel and the second polarizing pixel is specified as 90 degrees. In addition, the second polarizing pixels are provided equal to or more in number than the first polarizing pixels.
An image processing unit generates the high-frequency image by difference computation using the first polarization image and the second polarization image acquired by the polarization image acquisition unit on the basis of the combined light generated by the polarization optical unit. In the difference computation, a difference from a peripheral pixel that generates the pixel information on different polarized light is calculated for each pixel and the high-frequency image is generated. In addition, the image processing unit may compensate for a decrease in the amount of light due to the optical low-pass filter processing on the first polarization image.

The polarization image acquisition unit and the image processing unit may be integrated into one device, and the polarization optical unit may be provided in an attachable and detachable manner with respect to the polarization image acquisition unit.

A second aspect of this technology is achieved by

an image processing method including
generating a high-frequency image in an image processing unit, using a first polarization image based on first polarized light that has been generated from incident light and subjected to optical low-pass filter processing, and a second polarization image based on second polarized light that has been generated from the incident light but has not been subjected to the optical low-pass filter processing.

A third aspect of this technology is achieved by

a program for causing a computer to execute generation of a high-frequency image,
the program causing the computer to execute
a procedure of generating the high-frequency image from a first polarization image based on first polarized light that has been generated from incident light and subjected to optical low-pass filter processing, and a second polarization image based on second polarized light that has been generated from the incident light but has not been subjected to the optical low-pass filter processing.

Note that the program of the present technology is, for example, a program that can be provided for a general-purpose computer capable of executing diverse program codes, by a storage medium provided in a computer-readable form, or a communication medium, including a storage medium such as an optical disc, a magnetic disk, or a semiconductor memory, or a communication medium such as a network, for example. By providing such a program in a computer-readable form, processing according to the program is implemented on the computer.

BRIEF DESCRIPTION OF DRAWINGS

Fig. 1 is a diagram illustrating a configuration of an imaging system.
Fig. 2 is a diagram illustrating a configuration of a polarization optical unit.
Fig. 3 is a diagram illustrating a configuration of a polarization image acquisition unit.
Fig. 4 is a diagram illustrating a configuration of an image processing unit.
Fig. 5 is a flowchart illustrating an operation of the image processing unit.
Fig. 6 is a diagram for explaining difference calculation processing.
Fig. 7 is a diagram illustrating a case where more second polarizing pixels are provided than first polarizing pixels in number.
Fig. 8 is a diagram illustrating a configuration of a solid-state imaging device.
Fig. 9 is a diagram illustrating a case where a polarization optical unit is provided in an attachable and detachable manner with respect to the polarization image acquisition unit.

MODE FOR CARRYING OUT THE INVENTION

Hereinafter, modes for carrying out the present technology will be described. Note that the description will be given in the following order.

1. Configuration of Imaging System
2. Operation of Imaging System
3. Modifications
4. Application Examples

<1. Configuration of Imaging System>

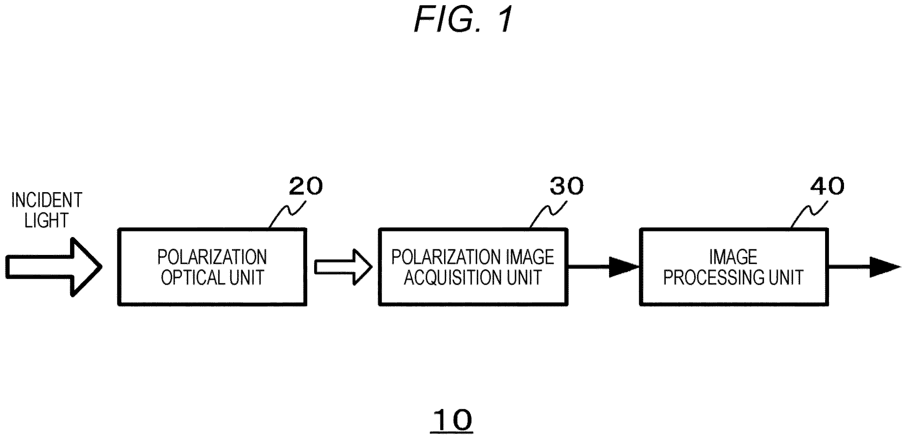

Fig. 1 illustrates a configuration of an imaging system using an image processing apparatus of the present technology.

An imaging system 10 includes a polarization optical unit 20, a polarization image acquisition unit 30, and an image processing unit 40.

The polarization optical unit 20 separates incident light into first polarized light and second polarized light having different oscillation directions in different electromagnetic fields to perform filter processing using an optical low-pass filter (hereinafter referred to as "optical low-pass filter processing") on the first polarized light and combines the first polarized light after the optical low-pass filter processing and the second polarized light that has not been subjected to the optical low-pass filter processing to generate combined light.

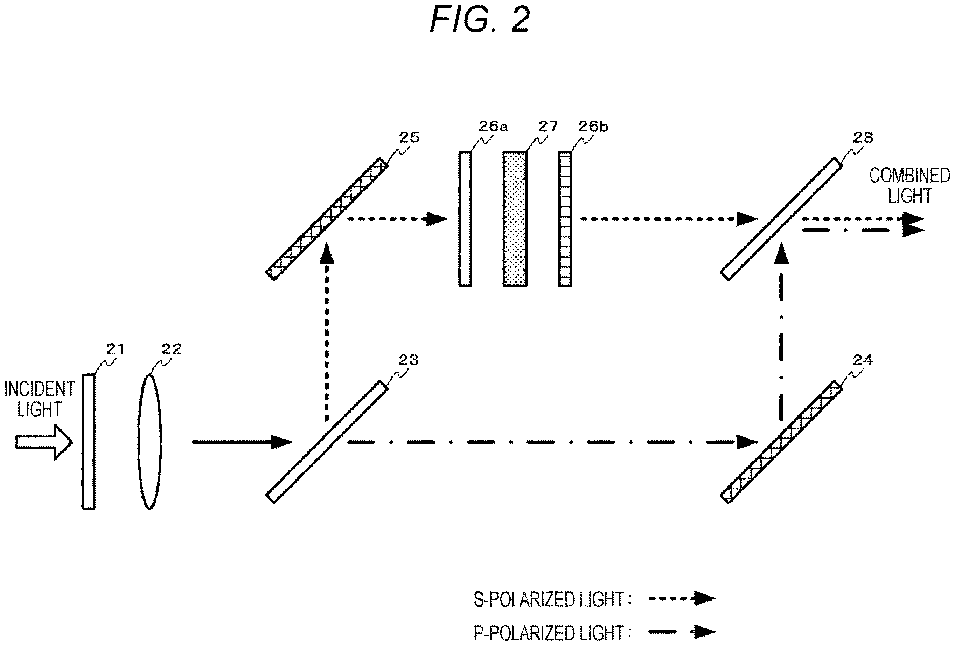

Fig. 2 illustrates a configuration of the polarization optical unit. The polarization optical unit 20 includes a depolarizing element 21, an imaging lens 22, a polarization separation element (polarization separation unit) 23, optical path change elements 24 and 25, a depolarizing element 26a, an optical low-pass filter 27, a polarizing filter 26b, and a polarized light combining element (polarized light combining unit) 28.

The depolarizing element 21 brings the incident light (subject light) into a random polarization state (non-polarization state). As the depolarizing element 21, a depolarization plate obtained by bonding wedge-shaped birefringent crystals together may be used, or a depolarizing element or the like having a subwavelength structure region may be used. The depolarizing element 21 brings the incident light into a non-polarization state and emits the depolarized incident light to the imaging lens 22. In this manner, by providing the depolarizing element 21, even if the incident light is brought into a specific polarization state by reflection or the like, the influence of the polarization state of the incident light can be prevented. In addition, in a case where the incident light is in the non-polarization state, the depolarizing element 21 may not be provided.

The imaging lens 22 is configured using a focus lens and forms a subject optical image on an imaging surface of the polarization image acquisition unit 30. In addition, the imaging lens 22 may be configured using a focus lens and a zoom lens such that a subject optical image having a desired image size can be formed on the imaging surface of the polarization image acquisition unit 30.

The polarization separation element 23 separates the incident light via the imaging lens 22 into first polarized light and second polarized light. For example, the polarization separation element 23 is constituted by a beam splitter to separate light that has been incident on the beam splitter into S-polarized light and P-polarized light with the beam splitter. Note that, in the following description, the S-polarized light is assumed to be the first polarized light and the P-polarized light is assumed to be the second polarized light, but the P-polarized light may be assumed to be the first polarized light and the S-polarized light may be assumed to be the second polarized light. For example, as depicted in Fig. 2, the polarization separation element 23 emits the P-polarized light in a direction of the optical path change element 24 and the S-polarized light in a direction of the optical path change element 25.

The optical path change element 24 changes an optical path of the P-polarized light emitted from the polarization separation element 23. The optical path change element 24 is, for example, a mirror and changes the optical path of the P-polarized light emitted from the polarization separation element 23 in a direction of the polarized light combining element 28 without changing the polarization state.

The optical path change element 25 changes an optical path of the S-polarized light emitted from the polarization separation element 23. The optical path change element 25 is, for example, a mirror and changes the optical path of the S-polarized light emitted from the polarization separation element 23 in a direction of the depolarizing element 26a without changing the polarization state.

The depolarizing element 26a brings the S-polarized light whose optical path has been changed by the optical path change element 25 into a non-polarization state. As the depolarizing element 26a, similarly to the depolarizing element 21, a depolarization plate obtained by bonding wedge-shaped birefringent crystals together may be used, or a depolarizing element or the like having a subwavelength structure region may be used. The depolarizing element 26a brings the S-polarized light into a non-polarization state and emits the depolarized S-polarized light to the optical low-pass filter 27.

The optical low-pass filter 27 attenuates a frequency component higher than a preset spatial frequency in the incident light and emits the attenuated incident light. The optical low-pass filter 27 attenuates a frequency component higher than a preset spatial frequency in the S-polarized light in the non-polarization state and emits transmitted light after the optical low-pass filter processing to the polarizing filter 26b.

The polarizing filter 26b extracts polarized light having a predetermined polarization component from the transmitted light from the optical low-pass filter 27. As the polarizing filter 26b, a wire grid polarizer may be used, or a polarizer or the like using a crystalline material may be used. The polarizing filter 26b is used as a pair with the depolarizing element 26a and extracts the S-polarized light before being brought into the non-polarization state by the depolarizing element 26a, from the transmitted light from the optical low-pass filter 27, to emit the extracted S-polarized light to the polarized light combining element 28.

Note that, in a case where the optical low-pass filter 27 can perform the optical low-pass filter processing without being affected by the polarization state of the incident light, the depolarizing element 26a and the polarizing filter 26b may not be provided in the polarization optical unit 20. In addition, the polarization optical unit 20 may have a configuration provided only with the polarizing filter 26b without providing the depolarizing element 26a to extract the S-polarized light from the transmitted light from the optical low-pass filter 27 and emit the extracted S-polarized light to the polarized light combining element 28.

The polarized light combining element 28 combines the first polarized light that has been separated by the polarization separation element 23 and subjected to the optical low-pass filter processing, with the second polarized light that has been separated by the polarization separation element 23 but has not been subjected to the optical low-pass filter processing, to generate combined light. The polarized light combining element 28 is constituted by, for example, a light-combining half mirror to combine the S-polarized light that has been separated by the polarization separation element 23 and subjected to the optical low-pass filter processing by the optical low-pass filter 27, with the P-polarized light that has been separated by the polarization separation element 23 but has not been subjected to the optical low-pass filter processing and emit, from the polarization optical unit 20, combined light in which the optical image of the S-polarized light subjected to the optical low-pass filter processing and the optical image of the P-polarized light not subjected to the optical low-pass filter processing overlap each other without causing a positional shift, and emission directions of the S-polarized light subjected to the optical low-pass filter processing and the P-polarized light not subjected to the optical low-pass filter processing have the same direction.

Furthermore, the polarization optical unit is not limited to the configuration depicted in Fig. 2 as long as the polarization optical unit can emit combined light obtained by combining the first polarized light that has been generated from the incident light and subjected to the optical low-pass filter processing, with the second polarized light that has been generated from the incident light but has not been subjected to the optical low-pass filter processing. For example, in one configuration, the polarization separation element 23, the optical low-pass filter 27, and the polarized light combining element 28 may be arranged on a straight line, and desirably, the configuration is adapted to allow the polarization optical unit to be downsized.

Returning to Fig. 1, the polarization image acquisition unit 30 has a configuration provided with a polarizing filter on an incident surface side of an image sensor and acquires a polarization image based on the first polarized light subjected to the optical low-pass filter processing and a polarization image based on the second polarized light not subjected to the optical low-pass filter processing on the basis of the combined light emitted from the polarization optical unit 20.

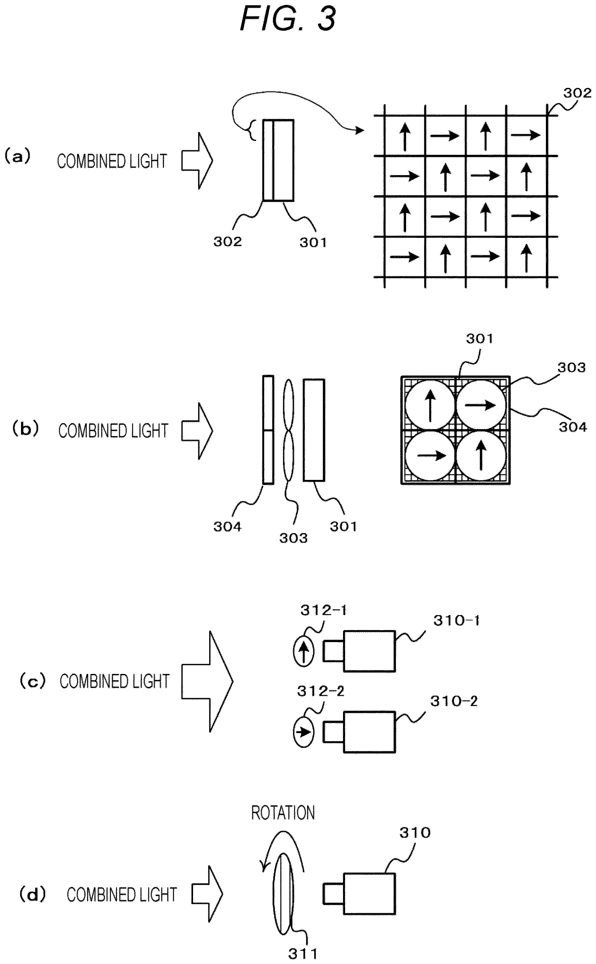

Fig. 3 illustrates a configuration of the polarization image acquisition unit. For example, as depicted in (a) of Fig. 3, the polarization image acquisition unit 30 arranges a polarizing filter 302 having a pixel configuration in a plurality of polarization directions in an image sensor 301 such as a complementary metal oxide semiconductor (CMOS) or a charge coupled device (CCD) to acquire a polarization image. The polarizing filter 302 is only required to take out linearly polarized light from the subject light, and for example, a wire grid, photonic liquid crystal, or the like is used. In addition, the polarizing filter 302 is configured to be able to acquire a polarization image based on the first polarized light subjected to the optical low-pass filter processing and a polarization image based on the second polarized light not subjected to the optical low-pass filter processing, from the combined light emitted from the polarization optical unit 20. For example, the polarizing filter 302 has a configuration in which polarizing filters having a difference of 90° in polarization directions are arranged such that the image sensor 301 includes a polarizing pixel that generates pixel information based on the P-polarized light and a polarizing pixel that generates pixel information based on the S-polarized light in the combined light emitted from the polarization optical unit 20. With such a configuration, the polarization image acquisition unit 30 can simultaneously acquire a polarization image based on the S-polarized light subjected to the optical low-pass filter processing and a polarization image based on the P-polarized light not subjected to the optical low-pass filter processing.

In addition, as depicted in (b) of Fig. 3, the polarization image acquisition unit 30 may generate a plurality of polarization images having different polarization directions, using a configuration of a multi-lens array. For example, a plurality of lenses 303 is provided on a front surface of the image sensor 301, and each lens 303 is caused to form one of optical images of a subject on an imaging surface of the image sensor 301. In addition, a polarizing plate 304 is provided on a front surface of each lens 303, and the polarization direction of the polarizing plate 304 is specified to have a direction in which the S-polarized light subjected to the optical low-pass filter processing is transmitted and a direction in which the P-polarized light not subjected to the optical low-pass filter processing is transmitted. By configuring the polarization image acquisition unit 30 in this manner, a polarization image based on the S-polarized light and a polarization image based on the P-polarized light can be simultaneously acquired in one time of imaging. In addition, as depicted in (c) of Fig. 3, with a configuration in which polarizing plates 312-1 and 312-2 having polarization directions different from each other are provided in front of imaging units 310-1 and 310-2, a plurality of polarization images having different polarization directions may be allowed to be acquired from a plurality of different viewpoints. For example, with a configuration in which the polarizing plate 312-1 that transmits the S-polarized light subjected to the optical low-pass filter processing is provided in front of the imaging unit 310-1 and the polarizing plate 312-2 that transmits the P-polarized light not subjected to the optical low-pass filter processing is provided in front of the imaging unit 310-2, a polarization image based on the S-polarized light subjected to the optical low-pass filter processing and a polarization image based on the P-polarized light not subjected to the optical low-pass filter processing may be acquired from a plurality of different viewpoints.

Note that, in a case where the movement of the subject is slow or in a case where the subject operates stepwise, in one configuration, a polarizing plate 311 may be provided in front of an imaging unit 310, as depicted in (d) of Fig. 3. In this case, imaging is performed in each of a polarization direction in which the S-polarized light subjected to the optical low-pass filter processing is transmitted and a polarization direction in which the P-polarized light not subjected to the optical low-pass filter processing is transmitted, by rotating the polarizing plate 311, and each of a polarization image based on the S-polarized light subjected to the optical low-pass filter processing and a polarization image based on the P-polarized light not subjected to the optical low-pass filter processing is acquired.

In addition, in the cases of (b) and (c) of Fig. 3, if positional intervals between the respective lenses 303 or the imaging units 310-1 and 310-2 are negligibly short with respect to the distance to the subject, the parallax can be ignored in the polarization image based on the S-polarized light subjected to the optical low-pass filter processing and the polarization image based on the P-polarized light not subjected to the optical low-pass filter processing. Note that, in a case where the parallax is not ignorable, the positions of the polarization image based on the S-polarized light subjected to the optical low-pass filter processing and the polarization image based on the P-polarized light not subjected to the optical low-pass filter processing may be aligned according to the amount of parallax.

Returning to Fig. 1, the image processing unit 40 generates a high-frequency image obtained by extracting high-frequency components from the subject image, using the first polarization image based on the first polarized light subjected to the optical low-pass filter processing and the second polarization image based on the second polarized light not been subjected to the optical low-pass filter processing, which have been acquired by the polarization image acquisition unit 30.

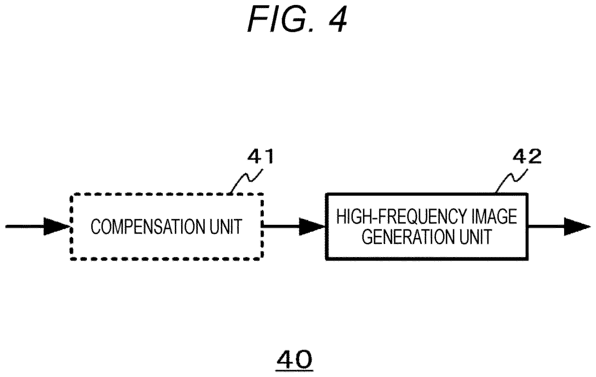

Fig. 4 illustrates a configuration of the image processing unit. The image processing unit 40 generates a high-frequency image, using the polarization images acquired by the polarization image acquisition unit 30. The image processing unit 40 includes, for example, a compensation unit 41 and a high-frequency image generation unit 42.

The compensation unit 41 performs gain adjustment on the first polarization image subjected to the optical low-pass filter processing in order to compensate for the amount of light that has decreased by performing the optical low-pass filter processing. Note that the gain used for compensation is set for the entire screen or for each pixel position on the basis of a measurement result obtained by measuring in advance the amount of light that decreases by performing the optical low-pass filter processing in advance.

The high-frequency image generation unit 42 calculates a difference between the polarization image based on the second polarized light and the first polarization image subjected to gain adjustment by the compensation unit 41 to generate a high-frequency image. The high-frequency image generation unit 42 may use a difference having a positive value or a negative value or may use a difference absolute value as image data indicating the high-frequency image. In addition, with a smaller bit width of the difference or the difference absolute value, the data amount of the high-frequency image may be reduced. Alternatively, by comparing the difference or the difference absolute value with a preset threshold value, a binary data indicating the comparison result may be specified as the image data of the high-frequency image.

Note that the image processing unit 40 may have a configuration in which the compensation unit 41 is not provided in a case where it is not necessary to consider a decrease in the amount of light due to the optical low-pass filter processing in the high-frequency image.

<2. Operation of Imaging System>

Next, an operation of the imaging system will be described. As described above, the polarization optical unit 20 separates the incident light into the first polarized light and the second polarized light to perform the optical low-pass filter processing on the first polarized light and combines the first polarized light after the filter processing and the second polarized light not subjected to the optical low-pass filter processing to generate combined light. For example, the polarization optical unit 20 having the configuration depicted in Fig. 2 separates the incident light into the S-polarized light and the P-polarized light to perform the optical low-pass filter processing on the S-polarized light and combines the S-polarized light after the filter processing and the P-polarized light not subjected to the optical low-pass filter processing to generate combined light.

With a configuration provided with a polarizing filter on an incident surface side of an image sensor, the polarization image acquisition unit 30 acquires a polarization image based on the polarized light subjected to the optical low-pass filter processing and a polarization image based on the polarized light not subjected to the optical low-pass filter processing on the basis of the combined light emitted from the polarization optical unit 20.

For example, in a case where the polarization optical unit 20 has the configuration depicted in Fig. 2, the polarization image acquisition unit 30 arranges polarizing filters so as to have a pixel configuration in which a pixel provided with a polarizing filter that transmits S-polarized light and a pixel provided with a polarizing filter that transmits P-polarized light are arranged in a mosaic form or each in a line shape. The polarization image acquisition unit 30 acquires a polarization image based on the S-polarized light subjected to the optical low-pass filter processing by using the pixel provided with the polarizing filter that transmits the S-polarized light and acquires a polarization image based on the P-polarized light not subjected to the optical low-pass filter processing by using the pixel provided with the polarizing filter that transmits the P-polarized light.

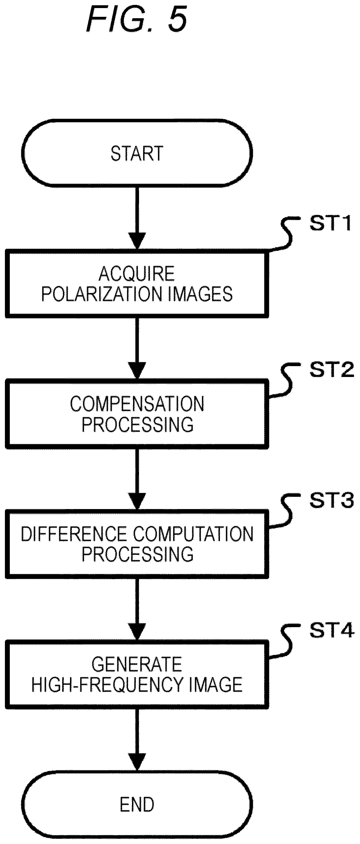

The image processing unit 40 generates a high-frequency image obtained by extracting high-frequency components from the subject image, using the polarization images generated by the polarization image acquisition unit 30. Fig. 5 is a flowchart illustrating an operation of the image processing unit.

In step ST1, the image processing unit 40 acquires polarization images. In a case where the polarization optical unit 20 has the configuration depicted in Fig. 2, the image processing unit 40 acquires a polarization image based on the S-polarized light subjected to the optical low-pass filter processing and a polarization image based on the P-polarized light not subjected to the optical low-pass filter processing, which have been generated by the polarization image acquisition unit 30, and proceeds to step ST2.

In step ST2, the image processing unit 40 performs compensation processing. For example, in a case where the polarization optical unit 20 has the configuration depicted in Fig. 2, the image processing unit 40 performs gain adjustment that compensates for a decrease in the amount of light caused in the S-polarized light due to the optical low-pass filter processing, on the polarization image that has been generated by the polarization image acquisition unit 30 and is based on the S-polarized light subjected to the optical low-pass filter processing, and proceeds to step ST3.

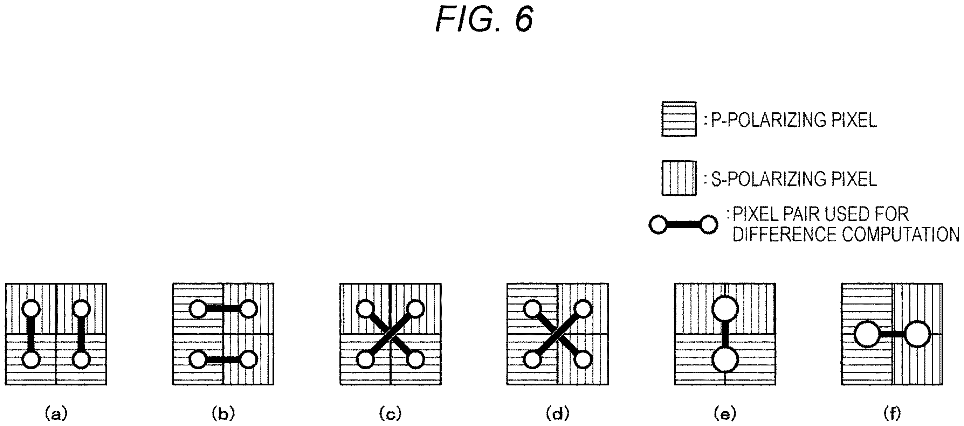

In step ST3, the image processing unit 40 performs difference computation processing. A difference between the polarization image based on the S-polarized light and the polarization image based on the P-polarized light is calculated. Fig. 6 is a diagram for explaining difference calculation processing.

Fig. 6 illustrates a case where two polarizing pixels having equal polarization directions are arranged side by side in a horizontal direction or in line in a vertical direction in the polarization image acquisition unit 30.

In Fig. 6, (a) depicts a case where two polarizing pixels having equal polarization directions are arranged side by side in the horizontal direction. In this case, the image processing unit 40 calculates a difference between polarizing pixels adjacent in the vertical direction.

In Fig. 6, (b) depicts a case where two polarizing pixels having equal polarization directions are arranged in line in the vertical direction. In this case, the image processing unit 40 calculates a difference between polarizing pixels adjacent in the horizontal direction.

In Fig. 6, (c) depicts a case where two polarizing pixels having equal polarization directions are arranged side by side in the horizontal direction. In this case, the image processing unit 40 calculates a difference between polarizing pixels adjacent in an oblique direction.

In Fig. 6, (d) depicts a case where two polarizing pixels having equal polarization directions are arranged in line in the vertical direction. In this case, the image processing unit 40 calculates a difference between polarizing pixels adjacent in an oblique direction.

In Fig. 6, (e) depicts a case where two polarizing pixels having equal polarization directions are arranged side by side in the horizontal direction. In this case, the image processing unit 40 calculates a pixel computation value (an addition value or an average value) of two pixels arranged side by side in the horizontal direction to calculate a difference between the pixel computation values having different polarization directions.

In Fig. 6, (f) depicts a case where two polarizing pixels having equal polarization directions are arranged in line in the vertical direction. In this case, the image processing unit 40 calculates a pixel computation value (an addition value or an average value) of two pixels arranged in line in the vertical direction to calculate a difference between the pixel computation values having different polarization directions.

Note that, in Fig. 6, the case where two polarizing pixels having equal polarization directions are arranged side by side in the horizontal direction or in line in the vertical direction has been illustrated, but polarizing pixels having different polarization directions may be alternately arranged in the horizontal direction and the vertical direction to achieve a configuration in which polarizing pixels having different polarization directions are arranged in a mosaic form. In this case, a difference is calculated between adjacent polarizing pixels having different polarization directions.

In addition, in a case where processing is performed by many kinds of applications, using the polarization image acquired by the polarization image acquisition unit 30, the polarization image is desirably an image not subjected to the optical low-pass filter processing. In such a case, the polarization image acquisition unit 30 increases the number of pixels of polarizing pixels that generate the pixel information based on the second polarized light not subjected to the optical low-pass filter processing (referred to as second polarizing pixels), as compared with polarizing pixels that generate the pixel information based on the first polarized light subjected to the optical low-pass filter processing (referred to as first polarizing pixels).

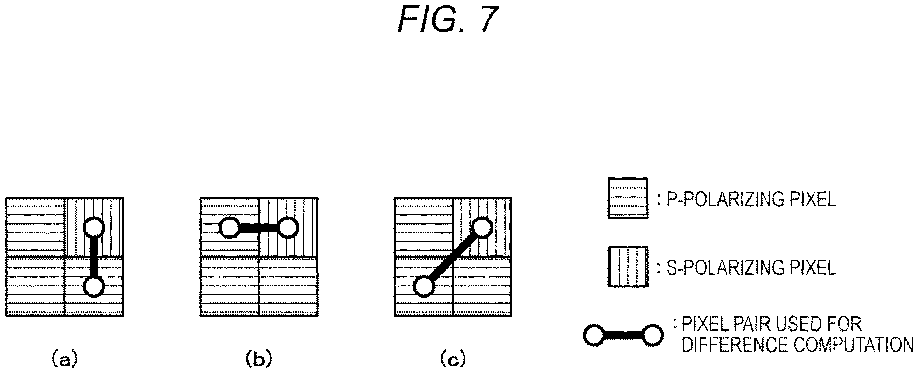

Fig. 7 illustrates a case where more second polarizing pixels are provided than the first polarizing pixels in number and depicts a case where one first polarizing pixel and three second polarizing pixels are provided in a polarizing pixel block of $2 \times 2$ pixels.

In this manner, in a case where more second polarizing pixels are provided than the first polarizing pixels in number, the second polarizing pixels having a larger number of pixels can acquire a larger amount of pixel information according to the polarized light not subjected to the optical low-pass filter processing. In addition, the first polarizing pixels having a smaller number of pixels can acquire pixel information from which the high-frequency components have been excluded by performing the optical low-pass filter processing.

In Fig. 7, (a) depicts a case where a difference is calculated between polarizing pixels adjacent in the vertical direction having different polarization directions, and (b) of Fig. 7 depicts a case where a difference is calculated between polarizing pixels adjacent in the horizontal direction having different polarization directions. In addition, (c) of Fig. 7 depicts a case where a difference is calculated between polarizing pixels adjacent in the oblique direction having different polarization directions.

The image processing unit 40 calculates a difference between a polarizing pixel that generates the pixel information based on the S-polarized light and a polarizing pixel that generates the pixel information based on the P-polarized light adjacent to the above polarizing pixel and proceeds to step ST4.

In step ST4, the image processing unit 40 generates a high-frequency image. The image processing unit 40 generates a high-frequency image indicating high-frequency components of the subject image on the basis of the difference calculated in step ST3. As described above, the image processing unit 40 may use a difference having a positive value or a negative value, or the difference absolute value as the image data indicating the high-frequency image, and may reduce the data amount of the high-frequency image with a smaller bit width of the difference or the difference absolute value. Alternatively, by comparing the difference or the difference absolute value with a preset threshold value, a binary data indicating the comparison result may be specified as the image data indicating the high-frequency image.

Formula (1) illustrates a generation formula for binary data Ded. Note that, in Formula (1), "Ip" indicates the pixel information (pixel value) based on the P-polarized light not subjected to the optical low-pass filter processing, and "Is" indicates the pixel information (pixel value) based on the S-polarized light subjected to the optical low-pass filter processing. In addition, "δ" denotes a preset threshold value.

[Mathematical Formula 1]

$$\mathrm{Ded} = \begin{cases} 0 & : \quad \left( \left| \mathrm{I}_p - \mathrm{I}_s \right| < \delta \right) \\ 1 & : \quad \left( \left| \mathrm{I}_p - \mathrm{I}_s \right| \geq \delta \right) \end{cases} \quad \cdots (1)$$

By generating the binary data Ded on the basis of the comparison between the difference absolute value and the threshold value, the image processing unit 40 can generate an edge image indicating the position of an edge, as the high-frequency image.

In this manner, the present technology generates polarized light in which a high-frequency component is attenuated by the optical low-pass filter processing to acquire a high-frequency image from a polarization image based on the polarized light subjected to the optical low-pass filter processing and a polarization image based on polarized light not subjected to the optical low-pass filter processing. Therefore, according to the present technology, a high-frequency image can be acquired at a low computational cost at high speed, as compared with a case where a high-frequency image is generated by performing filter processing, detection of a straight line or a peak of intensity of a gradient related to luminance, or the like on image information.

<3. Modifications>

Meanwhile, the imaging system 10 is not limited to a case where the polarization image acquisition unit 30 and the image processing unit 40 are separately provided. That is, the image processing apparatus of the present technology may be a solid-state imaging device in which the polarization image acquisition unit 30 and the high-frequency image generation unit 42 are integrated.

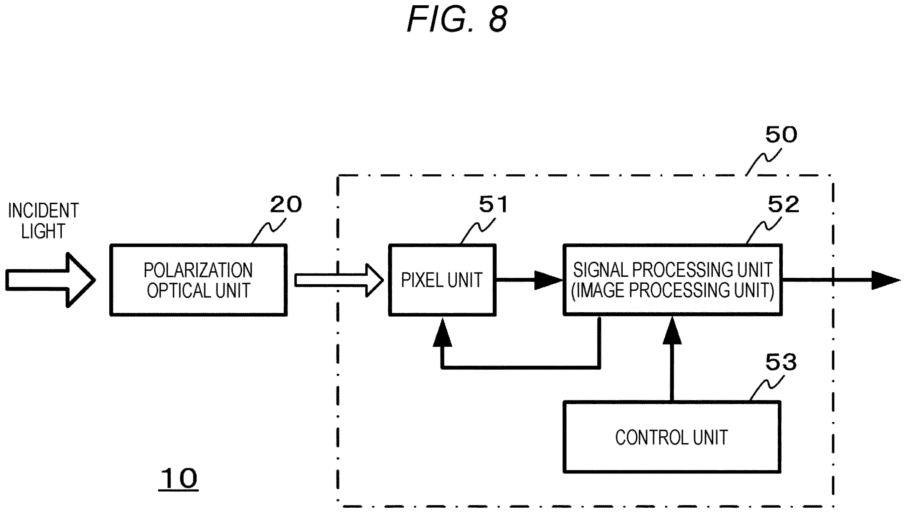

Fig. 8 illustrates a configuration of a solid-state imaging device. A solid-state imaging device 50 includes a pixel unit 51, a signal processing unit 52, and a control unit 53.

The pixel unit 51 is configured such that pixels that perform photoelectric conversion are arranged in an array. The pixel unit 51 generates a pixel signal according to the amount of polarized light transmitted through a polarizing filter in a pixel provided with the polarizing filter, as described above.

The signal processing unit 52 is provided with a vertical drive circuit, a column signal processing circuit, a horizontal drive circuit, and the like.

The vertical drive circuit sequentially selects and scans pixels of the pixel unit 51 in the vertical direction in units of rows on the basis of a clock signal and a control signal from the control unit 53 and reads a pixel signal generated in each pixel to supply the read pixel signal to the column signal processing circuit.

The column signal processing circuit performs signal processing such as noise removal on the pixel signals read from the pixels for each pixel column on the basis of the clock signal and the control signal from the control unit 53. For example, the column signal processing circuit performs signal processing such as correlated double sampling (CDS) for removing pixel-specific fixed pattern noise.

The horizontal drive circuit selects pixel columns of the column signal processing circuit in order on the basis of the clock signal and the control signal from the control unit 53 and outputs a pixel signal that has undergone the signal processing.

In addition, the signal processing unit 52 performs computation processing on the pixel signal output from the pixel unit 51, similarly to the above-described image processing unit 40. For example, the signal processing unit 52 sequentially stores the pixel signals output from the column signal processing circuit in, for example, a line buffer and calculates a difference between adjacent pixels having different polarization directions as depicted in Figs. 6 and 7, using the pixel signals of the line stored in the line buffer and the pixel signals of the next line output from the column signal processing circuit. Note that, as depicted in (b) of Fig. 6, in a case where a difference is calculated between pixels adjacent in the horizontal direction having different polarization directions, the line buffer may not be provided. The gain adjustment and computation processing in the signal processing unit 52 may be performed using an analog pixel signal, and a processing result may be converted into a digital signal. Alternatively, an analog pixel signal may be converted into a digital pixel signal, and the gain adjustment and computation processing may be performed using the digital pixel signal.

Furthermore, the signal processing unit 52 compares a signal indicating a difference result of a positive value or a negative value, a signal indicating the difference absolute value, a signal with a smaller bit width of the difference or the difference absolute value, the difference, or the difference absolute value with a preset threshold value to output a signal indicating a comparison result, as image data of a high-frequency image.

The control unit 53 generates the clock signal or the control signal serving as a reference of operations of the vertical drive circuit, the column signal processing circuit, the horizontal drive circuit, and the like on the basis of a vertical synchronization signal, a horizontal synchronization signal, and the clock signal to output the generated clock signal or control signal to the signal processing unit 52.

By configuring the solid-state imaging device in this manner, it becomes easy to make a system that uses a high-frequency image smaller in size and lighter in weight.

In addition, the imaging system 10 is not limited to a case where the polarization optical unit 20 is provided in the polarization image acquisition unit 30 in a fixed manner, and the polarization optical unit 20 may be provided in an attachable and detachable manner with respect to the polarization image acquisition unit 30.

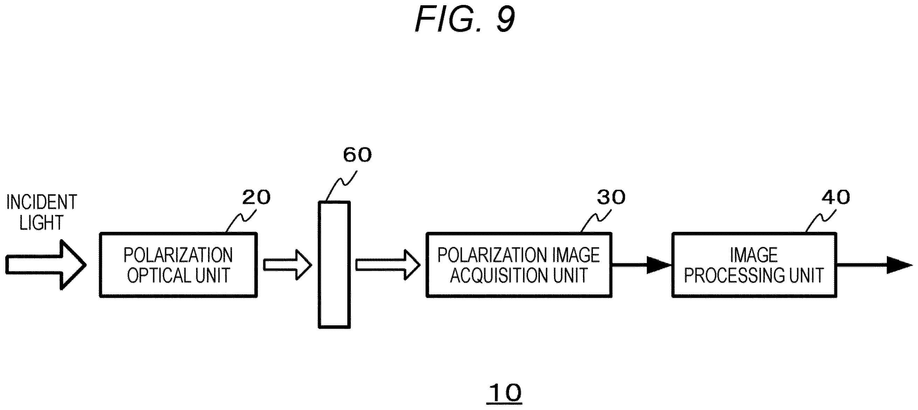

Fig. 9 illustrates a case where the polarization optical unit is provided in an attachable and detachable manner with respect to the polarization image acquisition unit. The polarization optical unit 20 is coupled to the polarization image acquisition unit 30 via a mount mechanism 60. The mount mechanism 60 holds the polarization optical unit 20 in an attachable and detachable manner with respect to the polarization image acquisition unit 30. In addition, the mount mechanism 60 positions the polarization optical unit 20 and the polarization image acquisition unit 30 such that the first polarizing pixel of the polarization image acquisition unit 30 works as a polarizing pixel in a polarization direction in which transmission of the first polarized light contained in the combined light emitted from the polarization optical unit 20 is maximized, and the second polarizing pixel works as a polarizing pixel in a polarization direction in which transmission of the second polarized light contained in the combined light emitted from the polarization optical unit 20 is maximized.

In this manner, if the polarization optical unit is provided in an attachable and detachable manner with respect to the polarization image acquisition unit, it becomes possible to select and use a polarization optical unit in which at least one of the focal length, the zoom magnification, or the filter characteristics of the optical low-pass filter is different, and a high-frequency image with a desired angle of view, filter characteristics, or the like can be easily acquired.

<4. Application Examples>

The technology according to the present disclosure can be applied to diverse fields. For example, the technology according to the present disclosure may be implemented as an apparatus equipped in any type of mobile body such as an automobile, an electric vehicle, a hybrid electric vehicle, a motorcycle, a bicycle, a personal mobility, an airplane, a drone, a ship, and a robot. In addition, the technology may be implemented as an apparatus equipped in equipment used in a production process in a factory, or equipment used in a construction field. If the technology is applied to such fields, an edge image indicating a contour of a surrounding object or the like can be acquired, and thus the surrounding environment can be easily grasped, and fatigue of a driver or a worker can be mitigated. In addition, automated driving, many kinds of works, and the like can be performed more safely and accurately.

The technology according to the present disclosure can also be applied to the medical field. For example, if the technology is applied to imaging of a surgical site at the time of performing surgery, the situation of the surgical site can be observed using not only a normal image but also an edge image, and it becomes possible to mitigate fatigue of an operator and perform surgery safely and more reliably. In addition, diagnosis and the like can also be performed accurately.

A series of processing tasks described herein may be executed by hardware, software, or a composite configuration of both. In a case of executing the processing by the software, a program recorded with a processing sequence is installed and executed in a memory in a computer incorporated in dedicated hardware. Alternatively, the program can be installed and executed on a general-purpose computer capable of executing various processing tasks.

For example, the program can be recorded in advance in a hard disk, a solid state drive (SSD), or a read only memory (ROM) as a recording medium. Alternatively, the program can be temporarily or permanently saved (recorded) in a removable recording medium such as a flexible disk, a compact disc read only memory (CD-ROM), a magneto optical (MO) disk, a digital versatile disc (DVD), a Blu-ray Disc (BD) (registered trademark), a magnetic disk, and a semiconductor memory card. Such a removable recording medium can be provided as what is called package software.

In addition, the program may be transferred to the computer in a wired or wireless manner from a download site via a network such as a wide area network (WAN) represented by cellular, a local area network (LAN), or the Internet, as well as installed on the computer from the removable recording medium. In the computer, it is possible to receive the program transferred in this manner and to install the received program on a recording medium such as a built-in hard disk.

Note that the effects described herein are merely examples and are not limited, and there may be an additional effect that is not described. In addition, the present technology should not be construed as being limited to the above-described embodiments of the technology. The embodiments of this technology disclose the present technology in the form of illustration, and it is obvious that those skilled in the art can alter or replace the embodiments without departing from the gist of the present technology. That is, in order to determine the gist of the present technology, claims should be taken into account.

In addition, the image processing apparatus of the present technology can also have configurations as follows.

(1) An image processing apparatus including
a high-frequency image generation unit that generates a high-frequency image, using a first polarization image based on first polarized light that has been generated from incident light and subjected to optical low-pass filter processing, and a second polarization image based on second polarized light that has been generated from the incident light but has not been subjected to the optical low-pass filter processing.
(2) The image processing apparatus according to (1), in which the high-frequency image generation unit performs difference computation using the first polarization image and the second polarization image to generate the high-frequency image.
(3) The image processing apparatus according to (2), in which the high-frequency image generation unit calculates a difference from a peripheral pixel that generates pixel information on different polarized light for each pixel to generate the high-frequency image.
(4) The image processing apparatus according to any one of (1) to (3), in which the high-frequency image generation unit performs compensation for a decrease in an amount of light due to the optical low-pass filter processing, on the first polarization image.
(5) The image processing apparatus according to any one of (1) to (4), further including a polarization image acquisition unit including a first polarizing pixel that generates pixel information on the first polarization image and a second polarizing pixel that generates pixel information on the second polarization image on the basis of combined light obtained by combining the first polarized light subjected to the optical low-pass filter processing and the second polarized light.
(6) The image processing apparatus according to (5), in which the polarization image acquisition unit specifies an angular difference in polarization directions between the first polarizing pixel and the second polarizing pixel as 90 degrees.
(7) The image processing apparatus according to (5) or (6), in which the second polarizing pixels are provided equal to or more than the first polarizing pixels in number in the polarization image acquisition unit.
(8) The image processing apparatus according to any one of (5) to (7), in which the polarization image acquisition unit and the high-frequency image generation unit are integrated.
(9) The image processing apparatus according to any one of (1) to (8), further including

a polarization optical unit that generates combined light obtained by combining the first polarized light subjected to the optical low-pass filter processing and the second polarized light, in which
the polarization optical unit includes:

a polarization separation unit that separates the incident light into the first polarized light and the second polarized light;
an optical filter unit that performs the optical low-pass filter processing on the first polarized light; and
a polarized light combining unit that combines the first polarized light subjected to the optical low-pass filter processing and the second polarized light not subjected to the optical low-pass filter processing to generate the combined light.

(10) The image processing apparatus according to (9), in which the polarization optical unit includes a depolarizing element that transforms the incident light to be incident on the polarization separation unit into non-polarized light.

(11) The image processing apparatus according to (9) or (10), in which the polarization optical unit includes: a depolarizing element that transforms the polarized light to be incident on the optical filter unit into non-polarized light; and
a polarizing filter that takes out the first polarized light from the non-polarized light that has undergone the optical low-pass filter processing in the optical filter unit.

(12) The image processing apparatus according to any one of (9) to (11), in which the polarization optical unit is provided in an attachable and detachable manner with respect to a polarization image acquisition unit including a first polarizing pixel that generates pixel information on the first polarization image and a second polarizing pixel that generates pixel information on the second polarization image on the basis of combined light obtained by combining the first polarized light subjected to the optical low-pass filter processing and the second polarized light that has not been subjected to the optical low-pass filter processing.

REFERENCE SIGNS LIST

| | |
|---|---|
| 10 | Imaging system |
| 20 | Polarization optical unit |
| 21, 26a | Depolarizing element |
| 22 | Imaging lens |
| 23 | Polarization separation element |
| 24, 25 | Optical path change element |
| 26b | Polarizing filter |
| 27 | Optical low-pass filter |
| 28 | Polarized light combining element |
| 30 | Polarization image acquisition unit |
| 40 | Image processing unit |
| 41 | Compensation unit |
| 42 | High-frequency image generation unit |
| 50 | Solid-state imaging device |
| 51 | Pixel unit |
| 52 | Signal processing unit |
| 53 | Control unit |
| 60 | Mount mechanism |
| 301 | Image sensor |
| 302 | Polarizing filter |
| 303 | Lens |
| 304, 311, 312-1, 312-2 | Polarizing plate |
| 310, 310-1, 310-2 | Imaging unit |

**Claims**

1. An image processing apparatus comprising
   a high-frequency image generation unit that generates a high-frequency image, using a first polarization image based on first polarized light that has been generated from incident light and subjected to optical low-pass filter processing, and a second polarization image based on second polarized light that has been generated from the incident light but has not been subjected to the optical low-pass filter processing.

2. The image processing apparatus according to claim 1,

wherein the high-frequency image generation unit performs difference computation using the first polarization image and the second polarization image to generate the high-frequency image.

3. The image processing apparatus according to claim 2,
wherein the high-frequency image generation unit calculates a difference from a peripheral pixel that generates pixel information on different polarized light for each pixel to generate the high-frequency image.

4. The image processing apparatus according to claim 1,
wherein the high-frequency image generation unit performs compensation for a decrease in an amount of light due to the optical low-pass filter processing, on the first polarization image.

5. The image processing apparatus according to claim 1, further comprising
a polarization image acquisition unit including a first polarizing pixel that generates pixel information on the first polarization image and a second polarizing pixel that generates pixel information on the second polarization image on a basis of combined light obtained by combining the first polarized light subjected to the optical low-pass filter processing and the second polarized light.

6. The image processing apparatus according to claim 5,
wherein the polarization image acquisition unit specifies an angular difference in polarization directions between the first polarizing pixel and the second polarizing pixel as 90 degrees.

7. The image processing apparatus according to claim 5,
wherein the second polarizing pixels are provided equal to or more than the first polarizing pixels in number in the polarization image acquisition unit.

8. The image processing apparatus according to claim 5,
wherein the polarization image acquisition unit and the high-frequency image generation unit are integrated.

9. The image processing apparatus according to claim 1, further comprising

a polarization optical unit that generates combined light obtained by combining the first polarized light subjected to the optical low-pass filter processing and the second polarized light,
wherein the polarization optical unit includes:

a polarization separation unit that separates the incident light into the first polarized light and the second polarized light;
an optical filter unit that performs the optical low-pass filter processing on the first polarized light; and
a polarized light combining unit that combines the first polarized light subjected to the optical low-pass filter processing and the second polarized light not subjected to the optical low-pass filter processing to generate the combined light.

10. The image processing apparatus according to claim 9,
wherein the polarization optical unit includes a depolarizing element that transforms the incident light to be incident on the polarization separation unit into non-polarized light.

11. The image processing apparatus according to claim 9,

wherein the polarization optical unit includes: a depolarizing element that transforms the polarized light to be incident on the optical filter unit into non-polarized light; and
a polarizing filter that takes out the first polarized light from the non-polarized light that has undergone the optical low-pass filter processing in the optical filter unit.

12. The image processing apparatus according to claim 9,

wherein the polarization optical unit is
provided in an attachable and detachable manner with respect to a polarization image acquisition unit including a first polarizing pixel that generates pixel information on the first polarization image and a second polarizing pixel that generates pixel information on the second polarization image on a basis of combined light obtained by combining the first polarized light subjected to the optical low-pass filter processing and the second polarized light that has not been subjected to the optical low-pass filter processing.

13. An image processing method comprising

generating a high-frequency image in a high-frequency image generation unit, using a first polarization image based on first polarized light that has been generated from incident light and subjected to optical low-pass filter processing, and a second polarization image based on second polarized light that has been generated from the incident light but has not been subjected to the optical low-pass filter processing.

14. A program for causing a computer to execute generation of a high-frequency image,

the program causing the computer to execute
a procedure of generating the high-frequency image from a first polarization image based on first polarized light that has been generated from incident light and subjected to optical low-pass filter processing, and a second polarization image based on second polarized light that has been generated from the incident light but has not been subjected to the optical low-pass filter processing.

# FIG. 1

INCIDENT
LIGHT

⟶ **20**

POLARIZATION
OPTICAL UNIT

⟹ **30**

POLARIZATION IMAGE
ACQUISITION UNIT

⟶ **40**

IMAGE
PROCESSING UNIT

⟶

<u>10</u>

## FIG. 2

COMBINED LIGHT

INCIDENT LIGHT

S-POLARIZED LIGHT : - - - - ▶

P-POLARIZED LIGHT : — · — ▶

# FIG. 3

(a) COMBINED LIGHT

302

302   301

(b) COMBINED LIGHT

301

303

304

304   303   301

(c) COMBINED LIGHT

312-1

310-1

312-2

310-2

(d) COMBINED LIGHT

ROTATION

310

311

*FIG. 4*

COMPENSATION UNIT

41

HIGH-FREQUENCY IMAGE GENERATION UNIT

42

40

## FIG. 5

```
            ┌─────────────┐
            │    START    │
            └─────────────┘
                   │
                   ▼
        ┌──────────────────────┐   ⌐ ST1
        │       ACQUIRE        │
        │ POLARIZATION IMAGES  │
        └──────────────────────┘
                   │
                   ▼
        ┌──────────────────────┐   ⌐ ST2
        │    COMPENSATION      │
        │     PROCESSING       │
        └──────────────────────┘
                   │
                   ▼
        ┌──────────────────────┐   ⌐ ST3
        │ DIFFERENCE COMPUTATION│
        │     PROCESSING       │
        └──────────────────────┘
                   │
                   ▼
        ┌──────────────────────┐   ⌐ ST4
        │      GENERATE        │
        │ HIGH-FREQUENCY IMAGE │
        └──────────────────────┘
                   │
                   ▼
            ┌─────────────┐
            │     END     │
            └─────────────┘
```

# FIG. 6

: P-POLARIZING PIXEL

: S-POLARIZING PIXEL

: PIXEL PAIR USED FOR
  DIFFERENCE COMPUTATION

(a)　　　(b)　　　(c)　　　(d)　　　(e)　　　(f)

## FIG. 7

(a)　　　　(b)　　　　(c)

▤ : P-POLARIZING PIXEL

▥ : S-POLARIZING PIXEL

○—○ : PIXEL PAIR USED FOR DIFFERENCE COMPUTATION

EP 4 440 129 A1

*FIG. 8*

*FIG. 9*

10

## INTERNATIONAL SEARCH REPORT

| International application No. |
| --- |
| **PCT/JP2022/035755** |

**A. CLASSIFICATION OF SUBJECT MATTER**

*H04N 23/60*(2023.01)i; *G03B 11/00*(2021.01)i; *G03B 15/00*(2021.01)i; *G03B 17/02*(2021.01)i; *G03B 30/00*(2021.01)i; *H04N 23/54*(2023.01)i; *H04N 23/55*(2023.01)i
FI: H04N5/232 290; H04N5/225 400; H04N5/225 300; G03B11/00; G03B15/00 V; G03B17/02; G03B30/00

According to International Patent Classification (IPC) or to both national classification and IPC

**B. FIELDS SEARCHED**

Minimum documentation searched (classification system followed by classification symbols)
    H04N5/232; G03B11/00; G03B15/00; G03B17/02; G03B30/00; H04N5/225

Documentation searched other than minimum documentation to the extent that such documents are included in the fields searched
    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-75561 A (PANASONIC IP MAN CORP) 12 May 2016 (2016-05-12)<br>entire text, all drawings | 1-14 |
| A | JP 2019-4203 A (SONY SEMICONDUCTOR SOLUTIONS CORP) 10 January 2019 (2019-01-10)<br>entire text, all drawings | 1-14 |
| A | JP 2004-120602 A (MATSUSHITA ELECTRIC IND CO LTD) 15 April 2004 (2004-04-15)<br>entire text, all drawings | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 October 2022** | **01 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

PCT/JP2022/035755

| Patent document cited in search report | | | Publication date (day/month/year) | Patent family member(s) | | | Publication date (day/month/year) |
|---|---|---|---|---|---|---|---|
| JP | 2016-75561 | A | 12 May 2016 | US entire text, all drawings CN | 2016/0098614 105488782 | A1 A | |
| JP | 2019-4203 | A | 10 January 2019 | US entire text, all drawings WO | 2020/0112666 2018/230045 | A1 A1 | |
| JP | 2004-120602 | A | 15 April 2004 | (Family: none) | | | |

Form PCT/ISA/210 (patent family annex) (January 2015)

## REFERENCES CITED IN THE DESCRIPTION

**Non-patent literature cited in the description**

- **CANNY, J.** A Computational Approach To Edge Detection. *IEEE Transactions on Pattern Analysis and Machine Intelligence,PAMI-8,* 1986, (6), 679-698